# EUROPÄISCHE PATENTSCHRIFT

(11) **EP 3 180 507 B1**
(45) Veröffentlichungstag und Bekanntmachung des Hinweises auf die Patenterteilung: **16.05.2018**
(21) Anmeldenummer: 15753624.4
(22) Anmeldetag: 31.07.2015
(51) Int. Cl.: F02M 25/08, B60K 15/03, G01G 3/16

(54) **FILTERANORDNUNG EINES FAHRZEUGES**
FILTERING DEVICE OF A VEHICLE
DISPOSITIF DE FILTRATION DE VÉHICULE

(30) Priorität: 11.08.2014 DE 102014215909
(43) Veröffentlichungstag der Anmeldung: 21.06.2017
(73) Patentinhaber: Bayerische Motoren Werke Aktiengesellschaft, 80809 München (DE)
(72) Erfinder: ARRAS, Emmanuel, 80637 München (DE)
(74) Vertreter: Schmidt, Günter H. H.
(86) Internationale Anmeldenummer: PCT/EP2015/067620
(87) Internationale Veröffentlichungsnummer: WO 2016/023770

(56) Entgegenhaltungen:
- EP-A1- 2 878 798
- DE-A1-102006 027 572
- DE-A1-102008 001 447
- US-A- 2 305 783

## Beschreibung

Vorliegende Erfindung betrifft eine Filteranordnung eines Fahrzeuges nach dem Oberbegriff des Anspruchs 1. Zum Stand der Technik wird auf die DE 10 2006 027 572 A1 verwiesen.

Für die Zulassung eines Fahrzeuges auf dem Markt müssen spezifische Testzyklen durchfahren werden, bspw. um die Einhaltung der Kohlenwasserstoff-Emissionsgrenzwerte nachzuweisen. Damit keine Kohlenwasserstoffe in der Atmosphäre freigesetzt werden, gibt es bei Kraftfahrzeugen mit Ottomotor einen Aktivkohlefilter zwischen dem Tank und der Atmosphäre. Dieser Aktivkohlefilter absorbiert die gasförmigen Kohlenwasserstoffe aus dem Tankentlüftungssystem. Der Aktivkohlefilter muss jedoch regelmäßig regeneriert werden. Die Regenaration geschieht über den das Fahrzeug bzw. Kraftfahrzeug antreibenden Verbrennungsmotor, der Unterdruck erzeugt und somit Luft aus der Umgebung durch das Aktivkohlefilter hindurch ansaugen kann. Dabei lösen sich die zuvor gespeicherten Kohlenwasserstoffe aus dem Aktivkohlefilter und gelangen mit der Umgebungsluft in den Verbrennungsmotor, wo sie verbrannt werden. Diese quasi externe Quelle von Kohlenwasserstoffen ist jedoch für den Motor eine "Störung" und es muss deswegen deren Einfluss oder Auswirkung auf den Verbrennungsmotor möglichst genau prognostiziert werden, um die angesaugte Menge und die übliche Einspritzung von Benzin aneinander anzupassen. Bei der Regeneration des Aktivkohlefilters schwankt dabei auch die Kohlenwasserstoffkonzentration in der Spülluft, d.h. im vom Verbrennungsmotor durch das Aktivkohlefilter hindurch angesaugten Luftstrom. Diese Konzentration in der Spülluft ist abhängig unter anderem vom Füllgrad des Aktivkohlefilters.

In der eingangs genannten Schrift ist ein Verfahren und eine Vorrichtung zur Bestimmung der Beladung eines Kraftstoffdampf-Zwischenspeichers bei Verbrennungsmotoren beschrieben, wobei der vorstehend genannte Füllgrad aus dem Schwingungsverhalten des Aktivkohlefilters bestimmt wird. Hierfür ist der Aktivkohlefilter über zwei Federelemente mit Freiheitsgrad in Gravitationsrichtung der Erde schwingfähig aufgehängt, ohne dass aus der Prinzipskizze dieser Schrift klar hervorgeht, wie diese Aufhängung konkret ausgeführt ist. Klar ist jedoch gezeigt, dass der Aktivkohlefilter im Bereich einer rechten Seite von dessen Gehäuse und im Bereich einer linken Seite von dessen Gehäuse jeweils über ein Federelement im Gravitationsfeld der Erde schwingfähig aufgehängt ist.

Die vorstehend geschilderte bekannte federnde Aufhängung kann jedoch zu undefinierten bzw. nicht eindeutig auswertbaren Schwingungen führen, insbesondere wenn das rechtsseitige und das linkseitige Federelement unterschiedlich stark ausgedehnt werden.

Es ist Aufgabe vorliegender Erfindung, eine Filteranordnung eines Fahrzeugs nach dem Oberbegriff des Patentanspruchs 1 aufzuzeigen, bei welcher nur eindeutige und somit auch eindeutig auswertbare Schwingungen bzw. Schwingungsbewegungen des Aktivkohlefilters auftreten können. Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch eine Filteranordnung eines Fahrzeuges, insbesondere Kraftfahrzeuges, umfassend einen Filter. Der Filter ist insbesondere ein Aktivkohlefilter zum Filtern von Kohlenwasserstoffen in der Abluft eines Tanks des Fahrzeuges. Anhand der folgenden Beschreibung der Erfindung wird jedoch ersichtlich, dass die Erfindung, insbesondere das Wiegen des Filters und das Ermitteln des Füllgrades des Filters basierend auf dem Gewicht, auch für weitere Filter in einem Kraftfahrzeug anwendbar ist, bspw. für Staubfilter usw.. Weiterhin umfasst die erfindungsgemäße Filteranordnung eine gefederte Aufhängung des Filters im Fahrzeug solchermaßen, dass der Filter um eine fahrzeugfeste Drehachse schwingfähig aufgehängt ist. Des Weiteren ist eine Sensoreinheit vorgesehen, die dazu ausgebildet ist, das Gewicht des Filters zu ermitteln. Der Ausdruck "Gewicht" ist hier gleichbedeutend mit dem Ausdruck "Masse".

Des Weiteren ist eine Auswerteeinheit vorgesehen. In der Auswerteeinheit kann das Leergewicht des Filters abgespeichert sein. Die Auswerteeinheit ist dazu ausgebildet, den Füllgrad des Filters zu berechnen. Diese Berechnung erfolgt basierend auf dem Leergewicht und dem ermittelten Gewicht. Dabei wird von dem ermittelten Gewicht das Leergewicht abgezogen, um somit das Gewicht der Füllung des Filters zu erhalten. Das Gewicht der Füllung des Filters entspricht dem "Füllgrad". Basierend auf dem berechneten Füllgrad des Filters können im Fahrzeug weitere Schritte eingeleitet werden. So ist es beispielsweise möglich, wie noch beschrieben wird, den Verbrennungsmotor sowie die üblichen Ventile des Tankentlüftungssystems der Fahrzeugs basierend auf dem berechneten Füllgrad geeignet anzusteuern. Des Weiteren kann beispielsweise eine Zustandsmeldung oder eine Fehlermeldung im Fahrzeug bei Erreichen eines bestimmten Füllgrades ausgegeben werden.

Die Sensoreinheit ist dazu ausgebildet, eine Schwingung des Filters zu messen, wobei der Filter nur in einer einzig möglichen definierten Weise schwingen kann, nämlich um eine Drehachse, bezüglich derer der Filter schwingfähig aufgehängt bzw. gelagert ist. Somit liefert die Messung durch die Sensoreinheit ein eindeutiges richtiges Ergebnis. Basierend auf der gemessenen Schwingung wird vorteilhafterweise die Eigenfrequenz des durch den Filter sowie ein geeignetes Federelement, über welches der Filter geeignet abgestützt ist, gebildeten Feder-Masse-Systems ermittelt. Basierend auf der Eigenfrequenz wiederum lässt sich das Gewicht des Filters berechnen, da die Eigenfrequenz invers proportional zur Quadratwurzel der Masse (Gewicht) ist.

Ferner ist vorgesehen, dass die Sensoreinheit einen Sensor umfasst. Dieser Sensor dient zum Messen der Schwingung des Filters. Beispielsweise ist als Sensor ein Magnet-Spule-Sensor vorgesehen, der in entsprechender Weise mit dem Filter oder mit der federnden Aufhängung des Filters verbunden ist. Alternativ dazu kann die Schwingung auch mit einem optischen Sensor gemessen werden.

Die Schwingung des Filters kann durch die natürliche Bewegung des Fahrzeuges verursacht werden; alternativ oder zusätzlich kann eine gezielte Schwingungsanregung mittels eines Aktuators erfolgen. Die Funktion des Aktuators der Sensoreinheit kann vorzugsweise in den Magnet-Spule-Sensor integriert sein. So kann der Magnet-Spule-Sensor durch entsprechende Ansteuerung der Spule nicht nur zum Messen der Schwingung, sondern auch zum Anregen des Filters genutzt werden. Ein Vorteil des Magnet-Spule-Sensors im Vergleich zu einem optischen Sensor ist, dass der Magnet-Spule-Sensor als Aktuator verwendet werden kann. Hinsichtlich einer auch aus energetischen Gründen besonders vorteilhaften Schwingungsanregung für das Filter durch das Fahrzeug selbst, d.h. durch dessen Bewegung ist eine erfindungsgemäße schwingfähige Aufhängung des Filters, nämlich um eine fahrzeugfeste Drehachse drehbar bzw. schwingfähig, besonders vorteilhaft. Mit der vorgeschlagenen Anordnung wird der Filter dann, wenn die Drehachse in Richtung der Fahrzeug-Querachse (und zumindest annähernd parallel zum Untergrund) verläuft, bei jedem nennenswerten Beschleunigungsvorgang und Abbremsvorgang des Fahrzeugs in Bewegung versetzt. In diesem Sinne umfasst die Erfindung auch ein Fahrzeug mit einer erfindungsgemäßen Filteranordnung, wobei die Sensoreinheit und/oder die Auswerteeinheit ausgelegt ist/sind, das aktuelle Gewicht des Filters bei zumindest annährend stillstehendem Fahrzeug zu ermitteln, wobei die Schwingungsbewegung des Filters Folge eines vorangegangenen Abbremsvorgangs des Fahrzeugs ist. Die Gefahr von Fehlern durch eine neuerliche Schwingungsanregung aufgrund einer geänderten Fahrzeug-Bewegung wird dadurch minimiert.

Gleiches gilt im übrigen fakultativ auch für eine alternative erfindungsgemäße Anordnung des Filters im Fahrzeug, nämlich wenn die besagte Drehachse im wesentlichen in Richtung der Fahrzeug-Hochachse (und damit zumindest annähernd senkrecht zum Untergrund) verläuft. Dann wird der Filter bei jeder nennenswerten Gierbewegung (Kurvenfahrt) des Fahrzeugs in Bewegung versetzt. Hingegen können bei einer Filteranordnung nach dem eingangs genannten Stand der Technik lediglich (seitens der Fzg.-Insassen eigentlich eigentlich unerwünschte) Vertikalschwingungen des Fahrzeug-Aufbaus eine Schwingungsanregung des Filters bewirken.

Die Erfindung umfasst ferner ein Fahrzeug mit einer erfindungsgemäßen Filteranordnung, wobei der Filter zum Filtern einer Abluft ausgebildet ist, die vom Kraftstoff-Tank des Fahrzeuges kommt. Insbesondere handelt es sich um ein Fahrzeug mit einem Otto-Verbrennungsmotor, wobei der Filter als Aktivkohlefilter zum Filtern von Kohlenwasserstoffen ausgebildet ist. Der Filter im Fahrzeug ist vorteilhafterweise über eine entsprechende Leitung mit dem Tank verbunden. Eine weitere Leitung verbindet den Filter mit dem Fzg.-Verbrennungsmotor. Des Weiteren ist der Filter mit der Atmosphäre verbunden.

Bevorzugt ist vorgesehen, dass der Verbrennungsmotor des Fahrzeuges zum Regenerieren des Filters ausgebildet ist. Für diesen Regenerierungsvorgang wird der Motor entsprechend zum Ansaugen von Luft über den Filter angesteuert. Dabei lösen sich die Kohlenwasserstoffe im Filter und verbrennen im Motor. Vorteilhafterweise ist eine Motorsteuereinheit vorgesehen, die den Motor entsprechend ansteuern kann, um die Luft über den Filter anzusaugen und die richtige Mange an Kraftstoff einzuspritzen. Aufgrund der erfindungsgemäßen Berechnung des Füllgrades des Filters kann diese Regeneration des Filters exakt dann durchgeführt werden, wenn sie nötig ist. Hierzu erfolgt die Ansteuerung des Motors in Abhängigkeit des berechneten Füllgrades.

Die Erfindung umfasst des Weiteren ein Verfahren zum Betrieb der beschriebenen Filteranordnung beziehungsweise zum Betrieb des beschriebenen Fahrzeuges. Dabei erfolgen eine Ermittlung des Gewichts des Filters und ein Berechnen des Füllgrades des Filters nach einer vorteilhaften Weiterbildung aus einem Kalibrierungsschritt zum Bestimmen des Leergewichts des Filters. So ist im Rahmen des Verfahrens insbesondere vorgesehen, dass die Schwingung des Filters gemessen wird, und basierend auf der Schwingung die Eigenfrequenz berechnet wird und basierend auf der Eigenfrequenz das Gewicht des Filters berechnet wird. Des Weiteren ist ein Verfahrensschritt zur Kalibrierung des Systems vorgeschlagen. Bei der Kalibrierung des Systems erfolgt ein Ermitteln des Gewichts direkt nach einer langen Phase an Regenerierung, also dem Ansaugen der Luft durch den Motor. Dieses Gewicht wird gespeichert und bei folgenden Berechnungen des Füllgrades berücksichtigt. Insbesondere wird das direkt nach der Regeneration des Filters ermittelte Gewicht als "Leergewicht" abgespeichert.

Weitere Einzelheiten, Merkmale und Vorteile der Erfindung ergeben sich aus der nachfolgenden Beschreibung und den Figuren. Es zeigen:
- Figur 1: ein erfindungsgemäßes Fahrzeug mit einer erfindungsgemäßen Filteranordnung gemäß einem ersten Ausführungsbeispiel,
- Figur 2: die erfindungsgemäße Filteranordnung gemäß dem ersten Ausführungsbeispiel,
- Figur 3: eine erfindungsgemäße Filteranordnung gemäß einem zweiten Ausführungsbeispiel,
- Figur 4: ein weiteres Ausführungsbeispiel sowie eine Darstellung zur Funktionsweise der erfindungsgemäßen Filteranordnung gemäß allen Ausführungsbeispielen.

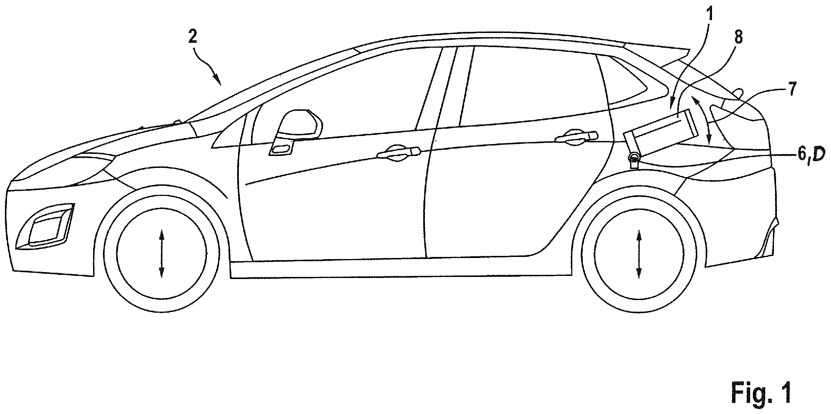

Die Figuren 1 bis 4 zeigen rein schematisch erfindungsgemäße Filteranordnungen 1 gemäß unterschiedlichen Ausführungsbeispielen. Die Ausführungsbeispiele unterscheiden sich dabei in der Ausgestaltung einer gefederten Aufhängung 6 der einzelnen Filter 8 im Fahrzeug 2.

Figur 1 zeigt die Anordnung der Filteranordnung 1 im Fahrzeug 2. Dabei ist ein Filter 8 der Filteranordnung 1 über eine gefederte Aufhängung 6 im Fahrzeug 2 um eine fahrzeugfeste Drehachse D - diese verläuft senkrecht zur Zeichenebene und verläuft bezüglich des Fahrzeugs 2 in Fahrzeug-Querrichtung - schwingfähig derart aufgehängt, dass der Filter 8 gemäß Pfeilrichtung 7 eine pendelnde Drehschwingung um die Drehachse D ausführen kann. In einer - ggf. zwischen zwei relativ weit voneinander beabstandet vorgesehenen Endanschlägen für diese pendelnde Drehschwingung liegenden - figürlich dargestellten Zwischenposition (als Ruhelage) wird der Filter 8 dabei durch eine nicht gezeigte Federanordnung bzw. zumindest ein geeignetes (und bspw. als Spiralfeder ausgebildetes) Federelement gehalten. Die Filteranordnung 1 stellt somit ein schwingfähiges Feder-Masse-System dar.

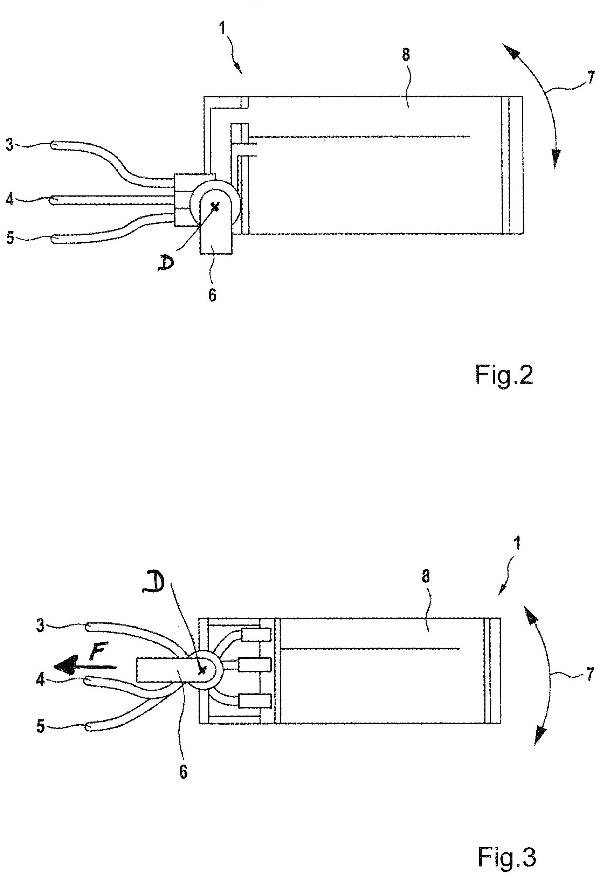

Figur 2 zeigt im Detail die Filteranordnung 1 aus Fig.1 mit einer etwas anderen Position des Filters 8, d.h. hier befindet sich der Filter 8 nicht in der in Fig.1 gezeigten Ruhelage bzw. Zwischenposition. Der Filter 8 der Filteranordnung 1 ist dabei ein Aktivkohlefilter in einem Tankentlüftungssystem des Fahrzeugs 2. Der

Filter bzw. Aktivkohlefilter 8 ist in üblicher Weise über eine erste Verbindung 3 mit der Atmosphäre bzw. nicht dargestellten Tankleckdiagnose-Vorrichtung, Staubfilter, etc. verbunden. Eine zweite Verbindung 4 verbindet den Filter 8 mit einem nicht dargestellten Verbrennungsmotor des Fahrzeuges 2. Eine dritte Verbindung 5 verbindet den Filter 8 mit einem nicht dargestellten Tank des Fahrzeuges 2.

Die Verbindungen 3, 4, 5 sind gasleitend ausgebildet. Über die dritte Verbindung 5 strömt Abluft aus dem Kraftstoff-Tank des Fahrzeugs 2 durch den Filter 8 in die erste Verbindung 3 und somit in die Atmosphäre. Der Filter 8 ist als Aktivkohlefilter ausgebildet und filtert Kohlenwasserstoffe aus der Abluft des Tanks. Die zweite Verbindung 4 ist für eine Regeneration des Filters 8 vorgesehen. Über die zweite Verbindung 4 kann der Verbrennungsmotor Luft über bzw. durch den Filter 8 ansaugen. Dabei lösen sich die Kohlenwasserstoffe aus dem Filter 8 und diese können dann im Motor verbrannt werden.

Wie bereits zu Figur 1 erwähnt wurde ist der Filter 8 ist mit seinem Gehäuse um eine fahrzeugfeste Drehachse D, die bei Figur 2 ebenso wie bei Figur 1 in Fzg.-Querrichtung vorzugsweise zumindest annähernd horizontal, d.h. parallel zum Untergrund verläuft, gemäß Pfeil 7 schwingfähig im Fahrzeug 2 aufgehängt, wobei die in Figur 2 gezeigte Lage oder Position des Filters 8 anders als bei Figur 1 ist. Vorzugsweise verläuft die (auch hier senkrecht zur Zeichenebene stehende) Drehachse D exzentrisch durch das Gehäuse des Filters 8 oder durch einen Gehäuse-Fortsatz, derart, dass die Drehachse D jedenfalls nicht durch den Massenschwerpunkt des Filters 8 verläuft. Damit ist jedenfalls dann, wenn die Ruheposition des Filters 8 wie in Figur 1 gezeigt ist, gewährleistet, dass der Filter 8 aufgrund der Ausbildung der Filteranordnung 1 als Feder-Masse-System zumindest bei intensiveren positiven oder negativen Längs-Beschleunigungsvorgängen des Fahrzeugs 2 in eine Schwingbewegung gemäß Pfeilrichtung 7 versetzt wird. Wäre die Ruheposition des Filters 8 so wie in Fig.2 gezeigt, so ergäbe sich eine Schwingbewegung des Filters 8 aufgrund einer Längs-Beschleunigung des Fahrzeugs praktisch nur resultierend aus Eintauch- oder Ausfeder-Vorgängen des Fahrwerks des Fahrzeugs. Mit einer Ruheposition gemäß Figur 1 hingegen wird der Filter 8 stets bei Längsbeschleunigung des Fahrzeugs in Schwingung versetzt. Im übrigen wird der Filter 8 sowohl mit einer Ruheposition gemäß Figur 1 als auch gemäß Figur 2 durch Vertikalbewegungen des Fahrzeug-Aufbaus gegenüber der Fahrbahn, welche in Fig.1 durch vertikale Pfeile in den Fzg.-Rädern verdeutlicht sind, aufgrund seiner Eigenschaft als schwingfähig aufgehängtes Feder-Masse-System in eine Drehschwingungsbewegung 7 um die Drehachse D versetzt.

Es kann der Filter 8 aber nicht nur ausgelöst durch Anregung über das Fahrzeug 2 bzw. dessen Bewegung, sondern alternativ oder zusätzlich auch durch eine eigenständige Schwingungsanregung eine Schwingung 7 ausführen. Eine solche eigenständige Schwingungsanregung kann dabei auf hier nicht dargestellte Weise durch die hierfür geeignet gestaltete Aufhängung 6 erfolgen, indem in dieser ein geeignet gestalteter Aktuator (nicht gezeigt) vorgesehen ist.

Auch beim Ausführungsbeispiel nach Fig.3 ist der Filter 8 über eine gefederte Aufhängung 6 solchermaßen schwingfähig aufgehängt und dabei ausreichend frei beweglich, um eine gewünschte Schwingung 7 um die Drehachse D auszuführen. Diese hier abermals senkrecht zur Zeichenebene verlaufende Drehachse D verläuft bei diesem Ausführungsbeispiel nach Figur 3 auch in der Realität senkrecht, d.h. senkrecht zur (üblicherweise) horizontal liegenden Fahrbahn, auf welcher sich das Fahrzeug 2 gemäß Pfeilrichtung F zunächst geradeaus fahrend bewegt. Mit einer solchen Anordnung der Drehachse D bezüglich des Filters 8 wird letzteres durch Gierbewegungen des Fahrzeugs 2, d.h. wenn dieses ausreichend schnell eine Kurve fährt, in eine Schwingungsbewegung gemäß Pfeil 7 versetzt. Selbstverständlich kann auch hier ein Aktuator für eine Schwingungsanregung vorgesehen sein.

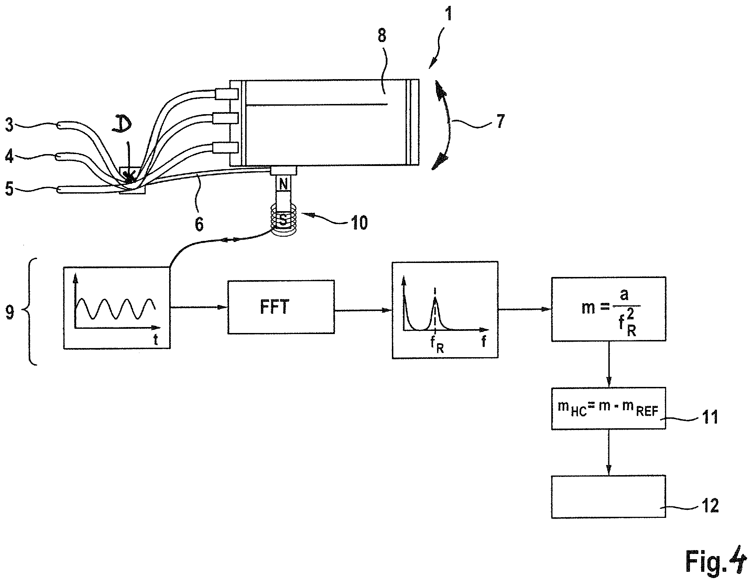

Figur 4 zeigt in Form eines vereinfachten Blockschaltbilds zu allen Ausführungsbeispielen eine schematische Darstellung der Funktionsweise der Filteranordnung 1; ferner ist in dieser Figur 4 eine alternative gefederte Aufhängung des Filters 8 dargestellt, nämlich über einen Biegefeder-Balken, dem die Bezugsziffer 6 zugeordnet ist. Dieser Biegefederfeder-Balken 6 ist in einem Drehachspunkt D, um den der Filter 8 dann pendelnde Drehschwingungen gemäß Pfeil 7 ausführen kann, fahrzeugfest eingespannt, während das andere Ende dieses Biegefeder-Balkens 6 den Filter 8 trägt. Stark abstrahiert dargestellt ist in diesem filternahen Endabschnitt des Biegefeder-Balkens 6 auch ein Magnet-Spule-Sensor 10 vorgesehen. Dieser Magnet-Spule-Sensor 10 ist Bestandteil einer Sensoreinheit 9, die vorzugsweise geeignet baulich in die gefederte Aufhängung 6 (in ihrer Allgemeinheit) integriert ist. Über den Magnet-Spule-Sensor 10 kann die Schwingung 7 des Filters 8 gemessen werden. Dabei kann über den Magnet-Spule-Sensor 10 durch entsprechende Ansteuerung von dessen Magnet-Spule der Filter 8 zur Ausführung der Schwingung 7 angeregt werden - hierbei handelt es sich jedoch lediglich um ein fakultatives Merkmal.

Die Sensoreinheit 9 umfasst entsprechende Recheneinheiten, um aus der gemessenen Schwingung, beispielsweise über Fast Fourier Tranformation, die Eigenfrequenz zu berechnen - dies ist im Blockschaltbild der Fig.4 bildlich dargestellt. Basierend auf der Eigenfrequenz des durch den Filter 8 mit seiner gefederten Aufhängung gebildeten Feder-Masse-Systems sowie unter Berücksichtigung, dass die Eigenfrequenz invers proportional zur Quadratwurzel der Masse beziehungsweise dem Gewicht ist, kann das Gewicht des Filters 8 berechnet werden. Dieses errechnete Gewicht wird an eine Auswerteeinheit 11 übergeben.

In dieser Auswerteeinheit 11 ist das Leergewicht (m_{REF}) des Filters 8 gespeichert. Durch eine einfache Berechnung kann aus dem Leergewicht und dem ermittelten Gewicht (m) der entsprechende Füllgrad (m_{HC}) (auch: Beladegrad) des Filters 8 berechnet werden. Der berechnete Füllgrad wiederum wird an eine Motorsteuereinheit 12 übergeben. Die Motorsteuereinheit 12 kann basierend auf dem Füllgrad den Verbrennungsmotor des Fahrzeugs sowie wie üblich in dem Fachmann bekannter Weise entsprechende Ventile in den gasleitenden Verbindungen 3, 4, 5 ansteuern und somit beispielsweise die Regeneration des Filters 8 über die zweite Verbindung 4 auslösen.

Die Erfindung ermöglicht es also, innerhalb eines Fahrzeuges 2 den Füllgrad eines Filters 8 zu bestimmen und zu nutzen. Dadurch ergibt sich die Möglichkeit, dass der Filter 8, insbesondere ausgebildet als Aktivkohlefilter, zu einem optimalen Zeitpunkt regeneriert (auch: gespült) werden kann, ohne die Motorlaufruhe zu stören. Es besteht keine Notwendigkeit mehr, die Motorbetriebspunkte anzupassen, um gesetzliche Tests zu bestehen. Dadurch reduziert sich die CO2-Emission. Im Umkehrschluss erlaubt die Erfindung eine gezielte Beladung des Filters, z.B. in dem Fall wo der Kraftstoffspeicher ein Drucktanksystem ist. Es ist nämlich möglich, den Tankinnendruck nur dann zu reduzieren und damit den Kraftstofftank zu entlasten, wenn der Filterzustand unter einem gewissen Füllgrad liegt, um sicher zu stellen, dass kein Kohlenwasserstoff in die Umgebung austritt.

## Patentansprüche

1. Filteranordnung (1) eines Fahrzeuges (2) umfassend einen Filter (8), vorzugsweise Aktivkohlefilter, eine gefederte Aufhängung (6) zur schwingfähigen Lagerung des Filters (8) im Fahrzeug (2), eine Sensoreinheit (9) zum Ermitteln einer dem aktuellen Gewicht des Filters (8) entsprechenden Größe aus einer Schwingungsbewegung des Filters (8), und eine Auswerteeinheit (11) zum Berechnen eines Füllgrades des Filters (8) aus dem ermittelten Filter-Gewicht unter Berücksichtigung des Leergewichts des Filters (8), **dadurch gekennzeichnet, dass** der Filter (8) um eine fahrzeugfeste Drehachse (D) schwingfähig aufgehängt ist.

2. Filteranordnung nach Anspruch 1, wobei die Drehachse (D) durch ein Gehäuse des Filters (8) oder einen starren Gehäuse-Fortsatz desselben verläuft.

3. Filteranordnung nach Anspruch 1, wobei der Filter (8) über einen einseitig eingespannten und dort die Drehachse (D) bildenden Biegebalken gelagert ist.

4. Filteranordnung nach einem der vorangegangenen Ansprüche, wobei die Sensoreinheit (9) dazu ausgebildet ist, eine Schwingung (7) des Filters (8), insbesondere die Eigenfrequenz der Schwingung (7), zu ermitteln, und basierend auf der ermittelten Schwingung (7) das Gewicht des Filters (8) zu berechnen.

5. Filteranordnung einem der vorangegangenen Ansprüche, wobei die Sensoreinheit (9) einen Magnet-Spule-Sensor (10) umfasst.

6. Filteranordnung nach Anspruch 5, wobei die Sensoreinheit (9) in Form eines des Magnet-Spule-Sensors (10) auch als Aktuator zum Anregen der Schwingung (7) ausgebildet ist.

7. Filteranordnung nach einem der vorangegangenen Ansprüche, wobei die Sensoreinheit (9) im Bereich der Drehachse (D) angeordnet ist.

8. Fahrzeug mit einer Filteranordnung (1) nach einem der vorhergehenden Ansprüche, wobei die Sensoreinheit (9) und/oder die Auswerteeinheit (11) ausgelegt ist/sind, das aktuelle Gewicht des Filters (8) bei stillstehendem Fahrzeug (2) zu ermitteln, wobei die Schwingungsbewegung des Filters Folge eines vorangegangenen Abbremsvorgangs des Fahrzeugs (2) ist.

9. Fahrzeug mit einer Filteranordnung (1) nach einem der vorhergehenden Ansprüche, wobei der Filter (8) zum Filtern einer Abluft aus einem Tank des Fahrzeuges (2) vorgesehen ist und ein im Fahrzeug (2) vorgesehener Verbrennungsmotor zum Regenerieren des Filters (8) mit diesem verbunden ist und seine Verbrennungsluft zumindest anteilig durch den Filter (8) bezieht, und wobei eine Motorsteuereinheit (12) ausgelegt ist, dem Verbrennungsmotor beim Regenerieren des Filters (8) Luft und/oder Kraftstoff in Abhängigkeit vom aktuell ermittelten Füllgrad des Filters (8) zuzuführen.

10. Verfahren zum Betrieb einer Filteranordnung (1) in einem Fahrzeug nach Anspruch 9.

11. Verfahren nach Anspruch 10, ferner umfassend einen Kalibrierungsschritt mit Ermitteln des Filter-Gewichtes direkt nach einer (ausreichend) langen Regenerierungs-Phase des Filters (8), Speichern desselben als Leergewicht und Berücksichtigen dieses Leergewichtes bei folgenden Berechnungen des Füllgrades.

## Claims

1. A filter arrangement (1) of a vehicle (2) comprising a filter (8), preferably an active carbon filter, a sprung suspension (6) for the vibrational mounting of the filter (8) in the vehicle (2), a sensor unit (9) for determining a variable corresponding to the current weight of the filter (8) from a vibrational movement of the filter (8), and an evaluation unit (11) for calculating a filling degree of the filter (8) from the determined filter weight under consideration of the empty weight of the filter (8), **characterised in that** the filter (8) is suspended such that the filter can vibrate about a rotational axis (D) fixed to the vehicle.

2. A filter arrangement according to claim 1, wherein the rotational axis (D) runs through a housing of the filter (8) or a rigid extension of the housing of the filter.

3. A filter arrangement according to claim 1, wherein the filter (8) is mounted via a bending bar that is clamped at one end and that forms the rotational axis (D) at the clamped location.

4. A filter arrangement according to any one of the preceding claims, wherein the sensor unit (9) is designed to determine a vibration (7) of the filter (8), more especially the natural frequency of the vibration (7), and to calculate the weight of the filter (8) on the basis of the determined vibration (7).

5. A filter arrangement according to any one of the preceding claims, wherein the sensor unit (9) comprises a magnetic coil sensor (10).

6. A filter arrangement according to claim 5, wherein the sensor unit (9) in the form of the magnetic coil sensor (10) is also formed as an actuator for exciting the vibration (7).

7. A filter arrangement according to any one of the preceding claims, wherein the sensor unit (9) is arranged in the region of the rotational axis (D).

8. A vehicle comprising a filter arrangement (1) according to any one of the preceding claims, wherein the sensor unit (9) and/or the evaluation unit (11) is/are designed to determine the current weight of the filter (8) when the vehicle (2) is stationary, wherein the vibration movement of the filter is the result of a preceding braking operation of the vehicle (2).

9. A vehicle comprising a filter arrangement (1) according to any one of the preceding claims, wherein the filter (8) is provided in order to filter waste air from a tank of the vehicle (2) and an internal combustion engine provided in the vehicle (2) is connected to the filter (8) to regenerate the filter and draws its combustion air at least proportionately through the filter (8), and wherein an engine control unit (12) is designed to feed air and/or fuel, depending on the currently determined filling degree of the filter (8), to the internal combustion engine when regenerating the filter (8).

10. A method for operating a filter arrangement (1) in a vehicle according to claim 9.

11. A method according to claim 10, further comprising a calibration step comprising the acts of: determining the filter weight directly after a (sufficiently) long regeneration phase of the filter (8); storing said weight as empty weight; and taking into consideration this empty weight in subsequent calculations of the filling degree.

## Revendications

1. Dispositif de filtration (1) destiné à un véhicule (2) comprenant un filtre (8), de préférence un filtre au charbon actif, une suspension élastique (6) permettant de monter le filtre (8) dans le véhicule (2) de sorte qu'il puisse osciller, une unité de capteur (9) permettant de déterminer une grandeur correspondant au poids actuel de ce filtre (8) à partir du mouvement d'oscillation de ce filtre (8), et une unité d'exploitation (11) permettant de calculer le degré de remplissage du filtre (8) à partir du poids déterminé et en prenant en considération son poids à vide, **caractérisé en ce que**
le filtre (8) est suspendu de sorte qu'il puisse osciller autour d'un axe de rotation (D) solidaire du véhicule.

2. Dispositif de filtration conforme à la revendication 1,
dans lequel l'axe de rotation (D) s'étend au travers du boîtier du filtre (8) ou d'un prolongement rigide de celui-ci.

3. Dispositif de filtration conforme à la revendication 1,
dans lequel le filtre (8) est monté sur une poutre flexible serrée d'un côté et y formant l'axe de rotation (D).

4. Dispositif de filtration conforme à l'une des revendications précédentes,
dans lequel l'unité de capteur (9) est réalisée pour permettre de détecter une oscillation (7) du filtre (8), en particulier la fréquence propre de l'oscillation (7), et de calculer le poids du filtre (8) sur le fondement de l'oscillation (7) détectée.

5. Dispositif de filtration conforme à l'une des revendications précédentes,
dans lequel l'unité de capteur (9) comporte un capteur (10) à bobine magnétique.

6. Dispositif de filtration conforme à la revendication 5,
dans lequel l'unité de capteur (9) est réalisée sous la forme d'un capteur à bobine magnétique (10) faisant également office d'actionneur pour activer l'oscillation (7).

7. Dispositif de filtration conforme à l'une des revendications précédentes,
dans lequel l'unité de capteur (9) est positionnée dans la zone de l'axe de rotation (D).

8. Véhicule équipé d'un dispositif de filtration (1) conforme à l'une des revendications précédentes,
dans lequel l'unité de capteur (9) et/ou l'unité d'exploitation (11) est(sont) réalisée(s) de façon à permettre de détecter le poids actuel du filtre (8) lorsque le véhicule (2) est à l'arrêt, et le mouvement d'oscillation du filtre étant consécutif à un processus de freinage antérieur du véhicule (2).

9. Véhicule équipé d'un dispositif de filtration (1) conforme à l'une des revendications précédentes,
dans lequel le filtre (8) est destiné à filtrer l'air s'échappant du réservoir du véhicule (2), un moteur à combustion interne monté dans le véhicule permettant de régénérer le filtre (8) est relié à ce filtre (8), et son air de combustion passe au moins en partie au travers de celui-ci, et une unité de commande (12) est réalisée pour permettre de transférer de l'air et/ou du carburant au moteur à combustion interne, lors de la régénération du filtre (8) en fonction du degré de remplissage déterminé.

10. Procédé de gestion d'un dispositif de filtration (1) dans un véhicule conforme à la revendication 9.

11. Procédé conforme à la revendication 10, comprenant en outre une étape de calibrage comprenant des étapes consistant à détecter directement le poids du filtre (8) après une phase de régénération (suffisamment) longue de celui-ci, à l'enregistrer en tant que poids à vide et à prendre en considération ce poids à vide lors des calculs ultérieurs du degré de remplissage.
